# EUROPEAN PATENT SPECIFICATION

(11) **EP 3 499 482 B1**
(45) Date of publication and mention of the grant of the patent: **05.08.2020**
(21) Application number: 17465595.1
(22) Date of filing: 15.12.2017
(51) Int. Cl.: G08G 1/14, G05D 1/00, B60W 30/00, G08G 1/00, B62D 1/00, B62D 15/02, B60W 30/06, G06K 9/00

(54) **METHOD AND SYSTEM FOR RE-PARKING A VEHICLE**
VERFAHREN UND SYSTEM ZUM AUTOMATISIERTEN UMPARKEN EINES FAHRZEUGS
PROCÉDÉ ET SYSTÈME DE RE-STATIONNEMENT D'UN VÉHICULE

(43) Date of publication of application: 19.06.2019
(73) Proprietor: Continental Automotive GmbH, 30165 Hannover (DE)
(72) Inventor: Padurariu, Catalin, 7007515 Iasi (RO)

(56) References cited:
- EP-A1- 2 905 704
- US-A1- 2017 016 266
- US-A1- 2017 140 649

## Description

### TECHNICAL FIELD

The present disclosure relates to a method and system for re-parking a vehicle. The present disclosure specifically relates to a method and system for re-parking a vehicle in an emergency situation in absence of a driver.

### BACKGROUND

Document US 2017/140649 A1 discloses a parking limit notification system for a vehicle which is configured to determine a set of a particular allotment of parking time associated with a parking space where a driver parks the vehicle. The notification system sets a timer that reflects the allotment of time. The notification system also determines a set of contextual constraints associated with the driver that limit the ability of the driver to return to the vehicle.

Document EP 2 905 704 A1 discloses a system and a method to perform an operation, by, responsive to receiving a vehicle event notification by a computing system in a vehicle. The method includes switching the computing system from a sleep mode to an active mode and sending, to a user, a user notification generated responsive to the vehicle event notification. The method further comprises returning the computing system to the sleep mode.

However, emergency situations may occur in which a parked vehicle needs to be re-parked, e.g. because the vehicle is blocking an access for emergency vehicles or because the vehicle is parked within a region of an occurring hazard. If any contact information of the driver or the owner of the vehicle can be identified by law enforcement authorities, then the driver or owner of the vehicle can be contacted in order to re-park or having re-parked the vehicle somewhere else. However, contact information to the driver may not be available to law enforcement authorities. Moreover, it may take too much time for the driver or the owner to get to his or her vehicle or to have the re-parking organized. Alternatively, law enforcement authorities may have the vehicle towed away. This also consumes time as a tower needs to be called. Moreover, this may become costly to the driver or owner of the vehicle as he or she may be faced with a fine or the costs of towing the vehicle. Hence, there is a need for a more effective and less time consuming re-parking scheme of vehicles in an emergency situation.

### DISCLOSURE OF THE INVENTION

It is therefore an objective of the present disclosure to address the issues stated above and to provide a method and system for re-parking a vehicle that works nicely.

This objective is achieved by a method according to the independent method claim and a system according to the independent system claim. Dependent claims relate to further aspects of the present disclosure.

The present disclosure relates to a method for re-parking a vehicle. The method includes acquiring, by one or more vehicle-side sensors, environment data of an environment of the vehicle.

The method further includes generating, by one or more vehicle-side processors, a message indicative of a potential necessity to re-park the vehicle based on the environment data. For this purpose the one or more vehicle-side processors pre-evaluate the environment data with respect to a potential necessity to re-park the vehicle.

The method continues with communicating, by a vehicle-side transceiver, the message indicative of a potential necessity to re-park the vehicle to an external device. On the vehicle side the method continues with communicating, by the vehicle-side transceiver, the environment data to the external device upon detection of an acknowledgement of the external device.
The method further includes receiving, by the vehicle-side transceiver, a command to re-park the vehicle in a pre-determined parking space; and initiating, by the one or processors, a re-parking the vehicle based on the command. Generating a message indicative of a potential necessity to re-park the vehicle comprises pre-evaluating, by one or more vehicle-side processers, the environment data with respect to a necessity to re-park the vehicle including classifying the environment data with respect to emergency cases.

Generating a message indicative of a potential necessity to re-park the vehicle by pre-evaluating the environment data can be performed on the vehicle-side. Pre-evaluating the environment includes classifying the environment data with respect to emergency cases such as a blocked access, due to the parking position of the vehicle, for ambulances, fire fighters and police. The environment data may be searched for street signs indicative of an emergency access or any of the above mentioned classes of vehicles having flashing lights on. The environment data may be further searched for other vehicles in the vicinity of the parked car that are currently towed away. For pre-evaluation of the environment data a vehicle-side classifier may be employed that may be further coupled to a vehicle-side data base. Pre-evaluating the environment data on the vehicle-side mainly serves the purpose of deciding whether the environment data is to be communicated to an external device, wherein either the external device itself or a user of the external device makes the final decision on whether to re-park the vehicle or not. The final evaluation of the environment data may take place on the side of the external device based on the communicated message and environment data.

One aspect of the method relates to the generation of the command to re-park the vehicle based on an evaluation of environment data received by the external device. Prior to receiving the environment data communicated by the vehicle-side, the external device may communicate an acknowledgement of a reception of the message indicative of a potential necessity to re-park the vehicle. Specifically, the acknowledgement may be generated at a time instance in which the external device is ready to evaluate environment by itself or upon detection of a user interaction to external device. In the latter case, the environment data shall only be communicated to the external device for final evaluation at a time instance in which a user of the external device can make or supplement the final evaluation of the environment data. The environment data may be communicated as video for example. The external device may be a smartphone or a tablet. Accordingly, the video shall only be communicated to the tablet at a time instance in which the user is able to watch the video. The user can indicate its ability to watch the video by responding to the message indicative of a potential necessity to re-park the vehicle by interacting with its smartphone or tablet. User interaction then initiates the generation of the acknowledgement which is communicated to the vehicle-side by the external device.

The final evaluation of the environment data may again include employing classifiers. As mentioned above, alternatively or additionally, a user of the external device may make or supplement the final evaluation. If the final evaluation of the environment indicates a necessity to re-park the vehicle, then a command to re-park the vehicle is generated in the external device. Generating the command to re-park the vehicle may include identifying a potential parking space suitable for re-parking the vehicle. The external device may identify a potential parking space by interrogating a parking-space data base with respect to availability and location of a potential parking space. The parking-space data base may be included in the external device. Alternatively, the parking-space data base may be accessible via an App installed on the external device. Moreover, the parking-space may be identified through user interaction by using the App. Specifically, identifying a potential parking space may include searching for a parking space having a minimum distance from the vehicle and reserving the parking space. Accordingly, the re-parked vehicle may be as nearly as easy accessible to the driver or owner as compared to its original parking position.

The generated command to re-park the vehicle is communicated to the vehicle-side. The one or more vehicle-side processors may initiate a re-parking using autonomous driving of the vehicle based on the command. The one or more vehicle-side processor may be included in an electronic control unit of the vehicle. The electronic control unit may generate control commands for actuators of the vehicle based on the command which includes the new parking position in order to autonomously drive the vehicle to the new parking position, i.e. new parking space.

The present disclosure further relates to a system for re-parking a vehicle. The system includes a vehicle-side electronic control unit and an external device. The vehicle-side electronic control unit may be coupled to one or more vehicle-side sensors configured to acquire environment data of an environment of the vehicle. The vehicle-side control unit includes one or more vehicle-side processors configured to generate a message indicative of a potential necessity to re-park the vehicle based on the environment data. The vehicle-side control unit is further coupled to a vehicle-side transceiver configured to communicate the message to the external device, to communicate the environment data upon detection of an acknowledgement of the external device, to receive a command to re-park the vehicle in a pre-determined parking space. The one or more vehicle-side processors are configured to initiate a re-parking of the vehicle based on the command.

### DESCRIPITION OF THE FIGURES

Different implementations of the present invention are shown in the drawings and will be described and discussed below. Therein,
Fig. 1 shows a block diagram of a system for re-parking a vehicle; and
Fig. 2 shows a flow graph of the method for re-parking a vehicle.

### DETAILED DESCRIPTION

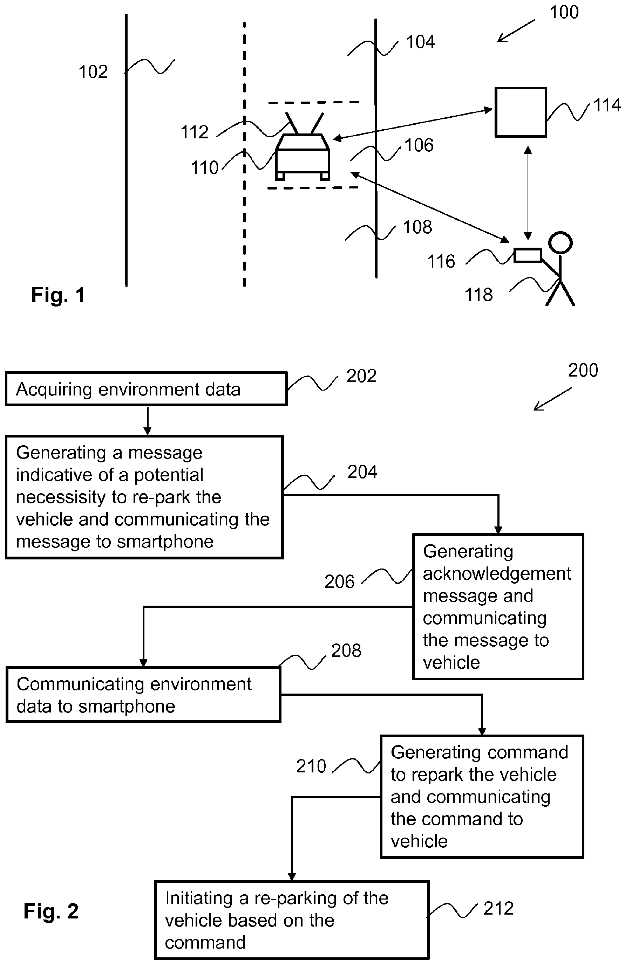

Fig. 1 shows a block a diagram of a system 100 for re-parking vehicle 110 that further includes a backend 114 and smartphone 116 held by the vehicle's owner 118. Vehicle 110 is currently parked on street 102 in parking space 106 located between parking space 104 and parking space 104. In this situation a team of sewer workers shows up and performs an intervention in that area at one of the underground pipelines underneath parking spaces 104, 106 and 108. As the sewer works an excavator (not shown) starts digging in the vicinity. Unfortunately, vehicle 110 being parked in the place where the faulty duct passes, works cannot continue. Hence, there is a need to relocate the vehicle 110, either automatically or with assistance of its owner 118.

The functionality of the system will be further described with reference to Fig. 2 which shows a flow graph of a method for re-parking vehicle 110.

Sensors 112 mounted on vehicle 110 acquire environment data of the environment surrounding the vehicle, see method stage 202. Specifically, sensors 112 can include a camera that acquires a series of images of the environment. The camera is coupled to vehicle-side processor which performs some kind of pre-evaluation of the series of camera images. The processor searches for features in the series of camera images that indicate an emergency situation, i.e. a possible necessity to re-park the vehicle. Here processor searches and finds the typical over-garment worn by construction works, e.g. orange colored vests, as well as construction vehicles. Upon detection of these features, the vehicle-side processor generates a message indicative of a potential necessity to re-park vehicle 110 and further communicates said message to smartphone 116 of the owner 118 either directly or via backend 114.

Owner 118 receives said message and indicates by using the touch screen of his smartphone 116 that he is ready for checking the environment. Subsequently, smartphone 116 generates an acknowledgement message, see method stage 206 and communicates said message back to vehicle 110.

Upon reception of the acknowledgement message, vehicle 110 communicates the environment data as video to smartphone 116. The owner 118 of vehicle 110 then can watch the video to see what is going on around his vehicle and can make a final assessment whether there is a necessity to re-park vehicle 110. The owner 118 can choose a suitable re-parking location and enter said location into its smartphone. The owner may consult a map app or a parking app on its smartphone for this purpose. Smartphone 116 then generates a command to re-park vehicle 110 and communicates said command back to vehicle 110, see method stage 210. The command includes at least an indication of a definite necessity to re-park the vehicle and may further include the desired re-paring location or re-parking space. The vehicle-side processor then initiates a re-parking of the vehicle based on the command, see method stage 212, e.g. by translating the command into control commands for autonomously driving the vehicle to the re-parking location.

The processor may be included in a remote control electronic control unit (RC-ECU) mounted in the vehicle. The RC-ECU communicates with sensors mounted in or on the vehicle, processes the information and communicates to the owner or driver via an existing infrastructure the emergency situation and of the vehicle surroundings and situation from in the vehicle.
The method for re-parking the vehicle may be executed in absence of owner assistance only by backend 114.

Upon reception of the message indicative of a potential necessity to re-park the vehicle, backend 114 attempts to establish a connection to smartphone 116. If that fails, backend 114 generates the acknowledgement message and communicates the message to vehicle 110, see method stage 206. Upon reception of the environment data, backend 114 performs the final assessment of the environment data by itself without the aid of the owner. For this purpose, backend 114 employs sophisticated classifiers. If the classifiers indicate a highly probable necessity to re-park the vehicle, backend 114 interrogates a database of parking locations and searches for parking location having a minimum distance to sparking 106. Based on the thus determined re-parking location, backend 114 generates the command to re-park the vehicle and communicates the command to the vehicle, see method stage 210. The command includes the re-parking location. Based on the command, the vehicle-side processor included in RC-ECU initiates a re-parking of vehicle 110, see method stage 212.

As describe above, the method provides a safe re-parking of a vehicle in an emergency situation without the driver inside the vehicle. Moreover, data exchange necessary for controlling the vehicle can be provided without the presence of the driver in the vehicle. The driver or owner of the car is informed about the emergency information in real time. Accordingly, possible accidents can be avoided.

## Claims

1. A method for re-parking a vehicle (110), the method comprising:
acquiring, by one or more vehicle-side sensors (112), environment data (202) of an environment of the vehicle (110);
generating, by one or more vehicle-side processors, a message (204) indicative of a potential necessity to re-park the vehicle (110) based on the environment data;
communicating, by a vehicle-side transceiver, the message to an external device (114, 116);
communicating, by the vehicle-side transceiver, the environment data (208) to the external device (114, 116) upon detection of an acknowledgement of the external device (114, 116);
receiving, by the vehicle-side transceiver, a command to re-park the vehicle (110) in a pre-determined parking space (106); and
initiating (212), by the one or more processors, a re-parking of the vehicle (110) based on the command, wherein generating a message indicative of a potential necessity to re-park the vehicle (110) comprises pre-evaluating, by the one or more vehicle-side processors, the environment data with respect to a necessity to re-park the vehicle (110)
**characterized in that** pre-evaluating the environment data includes classifying the environment data with respect to emergency cases.

2. The method of claim 1, the method further comprising:
generating, in the external device (114, 116), the command (210) to re-park the vehicle (110) based on an evaluation of environment data received by the external device (114, 116).

3. The method of claim 2, wherein generating the command (210) to re-park the vehicle (110) comprises identifying a potential parking space (106) suitable for re-parking the vehicle (110) .

4. The method of claim 3, wherein identifying a potential parking space (106) comprises interrogating a parking-space data base with respect to availability and location of a potential parking space (106).

5. The method of claim 4, wherein identifying a potential parking space (106) further comprises searching for a parking space (106) having a minimum distance from the vehicle (110) and reserving the parking space (106).

6. The method of any of claims 1 to 5, wherein re-parking the vehicle (110) based on the command (212) comprises autonomous driving of the vehicle (110) to the parking location.

7. The method of any of claims 1 to 6, wherein the external device is a smart-phone or a tablet (116) and wherein the method further comprises generating an acknowledgement (206) of the external device responsive of a confirmation of a user of the smartphone or tablet (116).

8. The method of any of claims 1 to 7, wherein the one or more vehicle-side processors are comprised in an electronic control unit of the vehicle (110).

9. A system (100) for re-parking a vehicle (110), the system comprising a vehicle-side electronic control unit and an external device (114, 116); wherein
the vehicle-side electronic control unit:
is coupled to one or more vehicle-side sensors (112) configured to acquire environment data of an environment of the vehicle (110) ;
comprises one or more vehicle-side processors configured to generate a message indicative of a potential necessity to re-park the vehicle (110) based on the environment data;
is further coupled to a vehicle-side transceiver configured to communicate the message to the external device (114, 116), to communicate the environment data upon detection of an acknowledgement of the external device (114, 116), to receive a command to re-park the vehicle (110) in a pre-determined parking space (106); and wherein the one or more vehicle-side processors are configured to initiate a re-parking of the vehicle (110) based on the command, wherein the one or more vehicle-side processors are configured to pre-evaluate the environment data for generating a message indicative of a potential necessity to re-park the vehicle (110)
**characterized in that** pre-evaluating the environment data includes classifying the environment data with respect to emergency cases.

10. The system of claim 9, wherein the external device (114, 116) is configured to generate the command to re-park the vehicle (110) based on an evaluation of environment data received by the external device (114, 116).

11. The system of any of claims 9 or 10, wherein the external device (114, 116) is configured to identify a potential parking space (106) suitable for re-parking the vehicle (110).

12. The system of claim 11, wherein the external device (114, 116) is configured to interrogate a parking-space data base with respect to availability and location of a potential parking space (106).

13. The system of claim 11 or 12, wherein the external device (114, 116) is configured to search for a parking space (106) having a minimum distance from the vehicle (110) and to reserve the parking space (106).

## Patentansprüche

1. Verfahren zum Umparken eines Fahrzeugs (110), wobei das Verfahren Folgendes umfasst:
Erfassen, durch einen oder mehrere fahrzeugseitige Sensoren (112), von Umgebungsdaten (202) einer Umgebung des Fahrzeugs (110) ;
Erzeugen, durch einen oder mehrere fahrzeugseitige Prozessoren, einer Nachricht (204), die indikativ für eine potenzielle Notwendigkeit zum Umparken des Fahrzeugs (110) ist, basierend auf den Umgebungsdaten;
Kommunizieren, durch einen fahrzeugseitigen Sendeempfänger, der Nachricht an eine externe Vorrichtung (114, 116);
Kommunizieren, durch den fahrzeugseitigen Sendeempfänger, der Umgebungsdaten (208) an die externe Vorrichtung (114, 116) bei Detektion einer Quittierung der externen Vorrichtung (114, 116);
Empfangen, durch den fahrzeugseitigen Sendeempfänger, eines Befehls zum Umparken des Fahrzeugs (110) in einen vorbestimmten Parkplatz (106); und
Initiieren (212), durch den einen oder die mehreren Prozessoren, eines Umparkens des Fahrzeugs (110) basierend auf dem Befehl, wobei Erzeugen einer Nachricht, die indikativ für eine potenzielle Notwendigkeit zum Umparken des Fahrzeugs (110) ist, Vorevaluieren, durch den einen oder die mehreren fahrzeugseitigen Prozessoren, der Umgebungsdaten bezüglich einer Notwendigkeit zum Umparken des Fahrzeugs (110) umfasst,
**dadurch gekennzeichnet, dass** Vorevaluieren der Umgebungsdaten Klassifizieren der Umgebungsdaten im Hinblick auf Notfälle umfasst.

2. Verfahren nach Anspruch 1, wobei das Verfahren ferner Folgendes umfasst:
Erzeugen, in der externen Vorrichtung (114, 116), des Befehls (210) zum Umparken des Fahrzeugs (110) basierend auf einer Evaluierung von durch die externe Vorrichtung (114, 116) empfangenen Umgebungsdaten.

3. Verfahren nach Anspruch 2, wobei Erzeugen des Befehls (210) zum Umparken des Fahrzeugs (110) Identifizieren eines potenziellen Parkplatzes (106), der für Umparken des Fahrzeugs (110) geeignet ist, umfasst.

4. Verfahren nach Anspruch 3, wobei Identifizieren eines potenziellen Parkplatzes (106) Abfragen einer Parkplatzdatenbank bezüglich Verfügbarkeit und Ort eines potenziellen Parkplatzes (106) umfasst.

5. Verfahren nach Anspruch 4, wobei Identifizieren eines potenziellen Parkplatzes (106) ferner Suchen nach einem Parkplatz (106), der eine minimale Entfernung vom Fahrzeug (110) aufweist, und Reservieren des Parkplatzes (106) umfasst.

6. Verfahren nach einem der Ansprüche 1 bis 5, wobei Umparken des Fahrzeugs (110) basierend auf dem Befehl (212) autonomes Fahren des Fahrzeugs (110) zum Parkort umfasst.

7. Verfahren nach einem der Ansprüche 1 bis 6, wobei die externe Vorrichtung ein Smartphone oder ein Tablet (116) ist und wobei das Verfahren ferner Erzeugen einer Quittierung (206) der externen Vorrichtung in Reaktion auf eine Bestätigung eines Benutzers des Smartphones oder Tablets (116) umfasst.

8. Verfahren nach einem der Ansprüche 1 bis 7, wobei der eine oder die mehreren fahrzeugseitigen Prozessoren in einer elektronischen Steuereinheit des Fahrzeugs (110) enthalten sind.

9. System (100) zum Umparken eines Fahrzeugs (110), wobei das System eine fahrzeugseitige elektronische Steuereinheit und eine externe Vorrichtung (114, 116) umfasst; wobei
die fahrzeugseitige elektronische Steuereinheit:
mit einem oder mehreren fahrzeugseitigen Sensoren (112) gekoppelt ist, die ausgelegt sind zum Erfassen von Umgebungsdaten einer Umgebung des Fahrzeugs (110);
einen oder mehrere fahrzeugseitige Prozessoren umfasst, die ausgelegt sind zum Erzeugen einer Nachricht, die indikativ für eine potenzielle Notwendigkeit zum Umparken des Fahrzeugs (110) ist, basierend auf den Umgebungsdaten;
ferner mit einem fahrzeugseitigen Sendeempfänger gekoppelt ist, der ausgelegt ist zum Kommunizieren der Nachricht an die externe Vorrichtung (114, 116), um die Umgebungsdaten bei Detektion einer Quittierung der externen Vorrichtung (114, 116) zu kommunizieren, um einen Befehl zum Umparken des Fahrzeugs (110) in einen vorbestimmten Parkplatz (106) zu empfangen; und
wobei der eine oder die mehreren fahrzeugseitigen Prozessoren ausgelegt sind zum Initiieren eines Umparkens des Fahrzeugs (110) basierend auf dem Befehl, wobei der eine oder die mehreren fahrzeugseitigen Prozessoren ausgelegt sind zum Vorevaluieren der Umgebungsdaten zum Erzeugen einer Nachricht, die indikativ für eine potenzielle Notwendigkeit zum Umparken des Fahrzeugs (110) ist, **dadurch gekennzeichnet, dass** Vorevaluieren der Umgebungsdaten Klassifizieren der Umgebungsdaten im Hinblick auf Notfälle umfasst.

10. System nach Anspruch 9, wobei die externe Vorrichtung (114, 116) ausgelegt ist zum Erzeugen des Befehls zum Umparken des Fahrzeugs (110) basierend auf einer Evaluierung von durch die externe Vorrichtung (114, 116) empfangenen Umgebungsdaten.

11. System nach einem der Ansprüche 9 oder 10, wobei die externe Vorrichtung (114, 116) ausgelegt ist zum Identifizieren eines potenziellen Parkplatzes (106), der für Umparken des Fahrzeugs (110) geeignet ist.

12. System nach Anspruch 11, wobei die externe Vorrichtung (114, 116) ausgelegt ist zum Abfragen einer Parkplatzdatenbank im Hinblick auf Verfügbarkeit und Ort eines potenziellen Parkplatzes (106).

13. System nach Anspruch 11 oder 12, wobei die externe Vorrichtung (114, 116) ausgelegt ist zum Suchen nach einem Parkplatz (106), der eine minimale Entfernung vom Fahrzeug (110) aufweist, und zum Reservieren des Parkplatzes (106).

## Revendications

1. Procédé de re-stationnement d'un véhicule (110), le procédé comprenant les étapes consistant à :
acquérir, par au moins un capteur côté véhicule (112), des données d'environnement (202) d'un environnement du véhicule (110) ;
générer, par au moins un processeur côté véhicule, un message (204) indiquant une nécessité potentielle de re-stationner le véhicule (110) sur la base des données d'environnement ;
communiquer, par un émetteur-récepteur côté véhicule, le message à un dispositif externe (114, 116) ;
communiquer, par l'émetteur-récepteur côté véhicule, les données d'environnement (208) au dispositif externe (114, 116) lors de la détection d'un accusé de réception du dispositif externe (114, 116) ;
recevoir, par l'émetteur-récepteur côté véhicule, une commande de re-stationnement du véhicule (110) sur une place de stationnement (106) prédéfinie ; et
lancer (212), par l'au moins un processeur, un re-stationnement du véhicule (110) sur la base de la commande, la génération d'un message indiquant une nécessité potentielle de re-stationner le véhicule (110) comprenant l'étape consistant à pré-évaluer, par l'au moins un processeur côté véhicule, les données d'environnement en ce qui concerne une nécessité de re-stationner le véhicule (110)
**caractérisé en ce que** la pré-évaluation des données d'environnement comprend l'étape consistant à classifier les données d'environnement en ce qui concerne les cas d'urgence.

2. Procédé selon la revendication 1, le procédé comprenant en outre l'étape consistant à :
générer, dans le dispositif externe (114, 116), la commande (210) de re-stationnement du véhicule (110) sur la base d'une évaluation des données d'environnement reçues par le dispositif externe (114, 116).

3. Procédé selon la revendication 2, la génération de la commande (210) de re-stationnement du véhicule (110) comprenant l'étape consistant à identifier une place de stationnement (106) potentielle appropriée pour re-stationner le véhicule (110).

4. Procédé selon la revendication 3, l'identification d'une place de stationnement (106) potentielle comprenant l'étape consistant à interroger une base de données de places de stationnement en ce qui concerne la disponibilité et l'emplacement d'une place de stationnement (106) potentielle.

5. Procédé selon la revendication 4, l'identification d'une place de stationnement (106) potentielle comprenant en outre l'étape consistant à rechercher une place de stationnement (106) ayant une distance minimale par rapport au véhicule (110) et à réserver la place de stationnement (106).

6. Procédé selon l'une quelconque des revendications 1 à 5, le re-stationnement du véhicule (110) sur la base de la commande (212) comprenant l'étape consistant à conduire de manière autonome le véhicule (110) jusqu'au lieu de stationnement.

7. Procédé selon l'une quelconque des revendications 1 à 6, le dispositif externe étant un téléphone intelligent ou une tablette (116) et le procédé comprenant en outre l'étape consistant à générer un accusé de réception (206) du dispositif externe en réponse à une confirmation d'un utilisateur du téléphone intelligent ou de la tablette (116).

8. Procédé selon l'une quelconque des revendications 1 à 7, l'au moins un processeur côté véhicule étant compris dans une unité de commande électronique du véhicule (110).

9. Système (100) de re-stationnement d'un véhicule (110), le système comprenant une unité de commande électronique côté véhicule et un dispositif externe (114, 116) ;
l'unité de commande électronique côté véhicule :
étant accouplée à au moins un capteur côté véhicule (112) et conçu pour acquérir des données d'environnement d'un environnement du véhicule (110) ;
comprenant au moins un processeur côté véhicule conçu pour générer un message indiquant une éventuelle nécessité de re-stationner le véhicule (110) sur la base des données d'environnement ;
étant en outre accouplée à un émetteur-récepteur côté véhicule conçu pour communiquer le message au dispositif externe (114, 116), pour communiquer les données d'environnement lors de la détection d'un accusé de réception du dispositif externe (114, 116), pour recevoir une commande de re-stationnement du véhicule (110) dans une place de stationnement (106) prédéfinie ; et l'au moins un processeur côté véhicule étant conçu pour lancer un re-stationnement du véhicule (110) sur la base de la commande, l'au moins un processeur côté véhicule étant conçu pour pré-évaluer les données d'environnement afin de générer un message indiquant une nécessité potentielle de re-stationner le véhicule (110),
**caractérisé en ce que** la pré-évaluation des données d'environnement comprend la classification des données d'environnement en ce qui concerne les cas d'urgence.

10. Système selon la revendication 9, le dispositif externe (114, 116) étant conçu pour générer la commande de re-stationnement du véhicule (110) sur la base d'une évaluation des données d'environnement reçues par le dispositif externe (114, 116) .

11. Système selon l'une quelconque des revendications 9 ou 10, le dispositif externe (114, 116) étant conçu pour identifier une place de stationnement (106) potentielle appropriée pour re-stationner le véhicule (110).

12. Système selon la revendication 11, le dispositif externe (114, 116) étant conçu pour interroger une base de données de places de stationnement en ce qui concerne la disponibilité et l'emplacement d'une place de stationnement (106) potentielle.

13. Système selon la revendication 11 ou 12, le dispositif externe (114, 116) étant conçu pour rechercher une place de stationnement (106) ayant une distance minimale par rapport au véhicule (110) et pour réserver la place de stationnement (106).
